Europäisches Patentamt

European Patent Office

Office européen des brevets

(19)

(11) Veröffentlichungsnummer: **0 298 953 B1**

## (12) EUROPÄISCHE PATENTSCHRIFT

(45) Veröffentlichungstag der Patentschrift:
06.03.91 Patentblatt 91/10

(51) Int. Cl.⁵ : **F16C 17/10**

(21) Anmeldenummer: **88890178.2**

(22) Anmeldetag: **06.07.88**

(54) Gleitlagerhälfte.

(30) Priorität: 06.07.87 AT 1689/87

(43) Veröffentlichungstag der Anmeldung:
11.01.89 Patentblatt 89/02

(45) Bekanntmachung des Hinweises auf die
Patenterteilung:
06.03.91 Patentblatt 91/10

(84) Benannte Vertragsstaaten:
CH DE ES FR GB IT LI NL SE

(56) Entgegenhaltungen:
EP-A- 0 192 592
GB-A- 1 386 253
GB-A- 2 134 189

(73) Patentinhaber: MIBA Gleitlager
Aktiengesellschaft
Hauptstrasse 3
A-4663 Laakirchen (AT)

(72) Erfinder: Lenhard-Backhaus, Hugo, Dipl.-Ing.
Linzerstrasse 61
A-4810 Gmunden (AT)
Erfinder: Ehrentraut, Otto
Sudetenplatz 1
A-4810 Gmunden (AT)
Erfinder: Haager, Ottmar
Werkweg 3
A-4663 Laakirchen (AT)

(74) Vertreter: Hübscher, Helmut, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz (AT)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Gleitlagerhälfte, bestehend aus einer Lagerhalbschale und wenigstens einem Anlaufbund, der als gesonderter Endflansch ausgebildet und mit gegen die Lagerhalbschale vorragenden Befestigungsansätzen versehen ist, die in stirnseitig offene wenigstens eine Hinterschneidung aufweisende Einsteckausnehmungen der Lagerhalbschale eingreifen.

Für einen von der Lagerhalbschale gesonderten Anlaufbund gibt es bei Gleitlagerhälften dieser Art im wesentlichen zwei Gründe, nämlich den der einfacheren Fertigung und den einer besseren Anpassung, weil die mögliche Verformung der Lagerhalbschale beim Einsetzen in eine Lagergrundbohrung durch den Anlaufbund nicht behindert wird und Zwangskräfte durch Relativbewegungen zwischen Lagerhalbschale und Anlaufbund vermieden werden. Um trotz der gesonderten Herstellung von Anlaufbund und Lagerhalbschale eine einfach handhabbare, vorgefertigte Baueinheit zu erhalten, ist es bekannt (AT-PS 317 618), die Lagerhalbschale an ihrer Stirnseite mit stirnseitig offenen Einsteckausnehmungen zu versehen, in die radial einwärts gerichtete Befestigungsansätze des Anlaufbundes eingreifen. Der den Anlaufbund bildende Endflansch wird in axialer Richtung auf die Lagerhalbschale aufgeschoben, wobei Befestigungsansätze in die Einsteckausnehmungen der Lagerhalbschale eingeführt werden. Durch ein nachträgliches Umbiegen von Spreizanschlägen, die sich in axialer Richtung vor die in den Einsteckausnehmungen befindlichen Befestigungsansätze legen, wird der Anlaufbund gegen ein axiales Abziehen gesichert. Nachteilig bei dieser bekannten Konstruktion ist vor allem, daß aufgrund der radial einwärts gerichteten, von den Spreizanschlägen der Lagerhalbschale umgriffenen Befestigungsansätze der mögliche Übergangsradius zwischen der Lagerhalbschale und dem Anlaufbund beschränkt ist, so daß aus solchen Lagerhalbschalen aufgebaute Gleitlager nicht bei Wellen mit größeren Übergangsradien im Bereich eines Wellenbundes eingesetzt werden können. Außerdem ist die axiale Festlegung der Anlaufbunde gegenüber der Lagerhalbschale ausschließlich durch die eingebogenen Spreizanschläge nicht immer ausreichend.

Ähnliche Nachteile treten bei einer anderen bekannten Konstruktion auf (GB-A-2 134 189), bei der der Anlaufbund mit gegen die Lagerhalbschale radial vorragenden Befestigungsansätzen in stirnseitig offene Einsteckausnehmungen der Lagerhalbschale eingreift, die an Stelle von nachträglich unbiegbaren Spreizanschlägen eine Hinterschneidung aufweisen, um ein axiales Abziehen des Anlaufbundes nach einem radialen Aufstecken auf die Lagerhalbschale zu verhindern.

Um den Anlaufbund ohne Zuhilfenahme eines Werkzeuges mit der Lagerhalbschale verbinden zu können, ist es schließlich bekannt (DE-PS 2 604 255), den Anlaufbund in eine Umfangsnut im Bereich des stirnseitigen Endes der Lagerhalbschale einzusetzen und am Anlaufbund radial einwärts gerichtete Anschläge vorzusehen, die in entsprechende Ausnehmungen der Lagerhalbschale eingreifen, so daß der Anlaufbund sowohl axial als auch radial gegenüber der Lagerhalbschale festgelegt ist. Zum Einführen der radial einwärts gerichteten Anschläge des Anlaufbundes in die zugehörigen Ausnehmungen der Lagerhalbschale kann deren elastische Verformbarkeit ausgenützt werden, indem die axialen Randbereiche der Lagerhalbschale während des Einsetzens des Anlaufbundes in die Umfangsnut gegeneinander gedrückt werden, um an den einwärts gerichteten Anschlägen des Anlaufbundes vorbeibewegt zu werden, bis in der Montagestellung sich diese Ansätze im Bereich der Schalenausnehmungen befinden, so daß mit der elastischen Rückstellung der Lagerhalbschale die Ansätze des Anlaufbundes in die Lagerausnehmungen einrasten. Nachteilig bei dieser bekannten Konstruktion ist einerseits, daß durch die Umfangsnut die Lagerhalbschale geschwächt wird und daß der Übergangsradius zwischen der Lagerhalbschale und dem Anlaufbund konstruktionsbedingt beschränkt ist, was das Einsatzgebiet solcher Lagerhalbschalen erheblich einengt.

Der Erfindung liegt somit die Aufgabe zugrunde, diese Mängel zu vermeiden und eine Gleitlagerhälfte der eingangs geschilderten Art mit einfachen Mitteln so zu verbessern, daß unter Wahrung einer ausreichenden Kraftübertragung zwischen dem Anlaufbund und der Lagerhalbschale der Übergangsradius zwischen Lagerhalbschale und Anlaufbund gegenüber herkömmlichen gattungsgemäßen Lagerhälften erheblich vergrößert werden kann.

Die Erfindung löst die gestellte Aufgabe dadurch, daß die Hinterschneidungen der Einsteckausnehmungen in axialer Richtung wirksam sind und daß die Befestigungsansätze axial vom Anlaufbund abstehend ausgerichtet und gegengleich Zuden Einsteckausnehmungen ausgebildet sind.

Durch das Vorsehen von Einsteckausnehmungen mit einer in axialer Richtung wirksamen Hinterschneidung und diese Hinterschneidung hintergreifenden, ebenfalls axial ausgerichteten Befestigungsansätzen wird zunächst eine auch für größere Kraftübertragungen geeignete, von der Wandstärke der Lagerhalbschale und des Anlaufbundes unabhängige, axiale Verbindung zwischen der Lagerhalbschale und dem Anlaufbund sichergestellt, weil die Hinterschneidungen und die Befestigungsansätze den jeweiligen Belastungsanforderungen entsprechend ausgebildet werden können. Das radiale Abziehen des Anlaufbundes von der Lagerhalbschale wird durch die Winkelversetzung der in die Einsteckausnehmungen eingreifenden Befestigungsansätze erreicht. Wenn einer der Befestigungsansätze in radialer Richtung aus der zugehörigen Einsteckausnehmung herausgezogen werden kann, sperren ja die anderen Befestigungsansätze diese Bewegungsmöglichkeit zufolge ihres Anschlages an der Begrenzung der Einsteckausnehmungen. Darüber hinaus erlaubt die axiale Ausrichtung der hinterschnittenen Einsteckausnehmungen und der in diese Ausnehmungen eingreifenden Befestigungsansätze eine weitgehend freie Wahl des Übergangsradius zwischen Lagerhalbschale und Anlaufbund, weil eben die Verbindung des Anlaufbundes und der Lagerhalbschale nicht von radial einwärts gerichteten, in der Flanschebene liegenden Befestigungsansätzen abhängt.

Obwohl die Form der Hinterschneidung der Einsteckausnehmungen nicht beschränkt ist, wenn eine ausreichende Kraftübertragung sichergestellt werden kann, ergeben sich besonders vorteilhafte Kraftübertragungsbedingungen, wenn die Einsteckausnehmungen und die gegengleichen Befestigungsansätze schwalbenschwanzförmig ausgebildet sind, weil in einem solchen Fall vergleichsweise große Kraftübertragungsflächen sichergestellt werden können.

Die Befestigungsansätze können in weiterer Ausbildung der Erfindung aus in axiale Richtung abgewinkelten Zungen bestehen, die beliebig lang gewählt werden können, um den jeweiligen Verbindungsanforderungen unter Berücksichtigung eines vorgegebenen Übergangsradius zwischen Lagerhalbschale und Anlaufbund zu genügen.

Da aufgrund der Hinterschneidung der Einsteckausnehmungen bei entsprechend den Hinterschneidungen ausgebildeten Befestigungsansätzen ein axiales Aufschieben der Anlaufbunde auf die Lagerhalbschale nicht möglich ist, wird der Anlaufbund vorzugsweise in einer achsnormalen Ebene auf die Lagerhalbschale aufgesteckt, wobei für den Eingriff der Befestigungsansätze in die nicht gegenüber der Aufsteckrichtung ausgerichteten Einsteckausnehmungen die elastische Verformbarkeit der Lagerhalbschale durch ein Zusammendrücken oder ein Aufspreizen ausgenützt wird, um die Lagerhalbschale an diesen Befestigungsansätzen vorbeibewegen zu können, bis sie im Bereich der zugehörigen Einsteckausnehmungen zu liegen kommen. Zur Demontage brauchen die Befestigungsansätze durch ein vergleichsweise geringfügiges elastisches Verformen der Lagerhalbschale nur aus ihren Einsteckausnehmungen herausgeführt zu werden, um in umgekehrter Reihenfolge den Anlaufbund von der Lagerhalbschale abheben zu können.

Ist die Lagerhalbschale aufgrund ihrer höheren Beigefestigkeit für ein solches federndes Einsetzen der Befestigungsansätze in die Einsteckausnehmungen nicht geeignet, so kann eine einfache Montage dadurch gewährleistet werden, daß zumindest einer der Befestigungsansätze eine wenigstens angenähert rechtwinkelige Grundform mit entsprechend der Hinterschneidung der zugehörigen Einsteckausnehmung abspreizbaren Randstegen aufweist. Dieser Befestigungsansatz kann somit auch in axialer Richtung in die zugehörige, hinterschnittene Einsteckausnehmung eingeführt werden, wie dies erforderlich ist, wenn der Anlaufbund zur Montage um einen Durchmesser oder eine Tangente der Lagerhalbschale gegenüber dieser verschwenkt wird. Bei einer solchen Schwenkbewegung können nämlich unter einem zulässigen Spiel zumindest die in der Nähe der Schwenkachse befindlichen Befestigungsansätze trotz ihrer die Hinterschneidung der zugehörigen Einsteckausnehmungen hintergreifenden Verbreiterung in diese Einsteckausnehmungen eingeführt werden, ohne die axiale Sicherung des Anlaufbundes nach dem Abspreizen der Randstege des in seiner Grundform rechtwinkeligen Befestigungsansatzes zu beeinträchtigen.

In der Zeichnung ist der Erfindungsgegenstand beispielsweise dargestellt. Es zeigen

Fig. 1 eine erfindungsgemäße Gleitlagerhälfte vor der Verbindung des Anlaufbundes mit der Lagerhalbschale in einem vereinfachten Schaubild,

Fig. 2 diese Gleitlagerhälfte während des Einführens der Befestigungsansätze des Anlaufbundes in die zugehörigen Einsteckausnehmungen der Lagerhalbschale in einer Stirnansicht,

Fig. 3 einen Axialschnitt durch eine Konstruktionsvariante einer erfindungsgemäßen Gleitlagerhälfte und

Fig. 4 die Gleitlagerhälfte nach Fig. 3 in einem Schaubild in einem kleineren Maßstab.

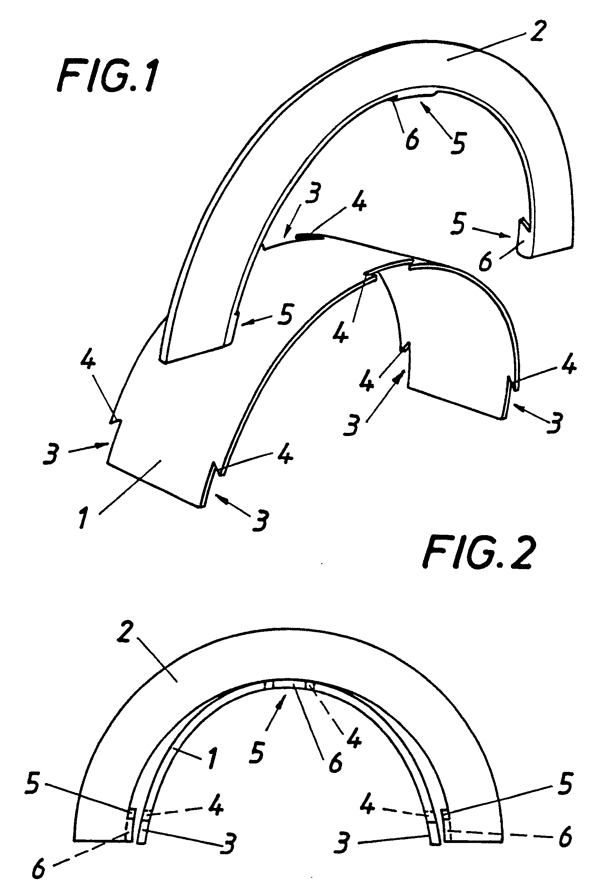

Wie die Fig. 1 und 2 erkennen lassen, besteht die dargestellte Gleitlagerhälfte aus einer Lagerhalbschale 1 und einem als Endflansch ausgebildeten Anlaufbund 2, wobei sowohl die Gleitschale 1 als auch der Anlaufbund 2 eine entsprechend ausgebildete Lauffläche aufweisen, die vorzugsweise galvanisch aufgetragen wird, was jedoch aus Übersichtlichkeitsgründen nicht näher dargestellt ist. Zur Befestigung des Anlaufbundes 2 an der Lagerhalbschale 1 ist diese mit Einsteckausnehmungen 3 versehen, die eine in axialer Richtung wirksame Hinterschneidung 4 in Form eines Schwalbenschwanzes bilden. Entsprechend diesen Einsteckausnehmungen 3 sind am Anlaufbund 2 Befestigungsansätze 5 vorgesehen, die aus in axiale Richtung abgewinkelten Zungen 6 bestehen. Um den Anlaufbund 2 mit der Lagerhalbschale 1 zu verbinden, wird der Anlaufbund 2 in radialer Richtung auf die Lagerhalbschale 1 aufgesteckt, und zwar unter gleichzeitigem Gegeneinanderdrücken der beiden axialen Randbereiche der Lagerhalbschalen 1, wie dies in Fig. 2 angedeutet wird. Dadurch wird es in einfacher Weise möglich, die Lagerhalbschale 1 an den äußeren Zungen 6 vorbeizubewegen, bis diese Zungen 6 im Bereich der Einsteckausnehmungen 3 zu liegen kommen, so daß nach der federnden Rückstellung der Lagerhalbschale 1 der Befestigungseingriff sichergestellt wird. Der mittlere Befestigungsansatz 5 kann unmittelbar in die zugehörige Einsteckausnehmung 3 in radialer Richtung eingeführt werden, weil die Einführrichtung mit der Aufsteckrichtung des Anlaufbundes 2 auf die Lagerhalbschale 1 übereinstimmt.

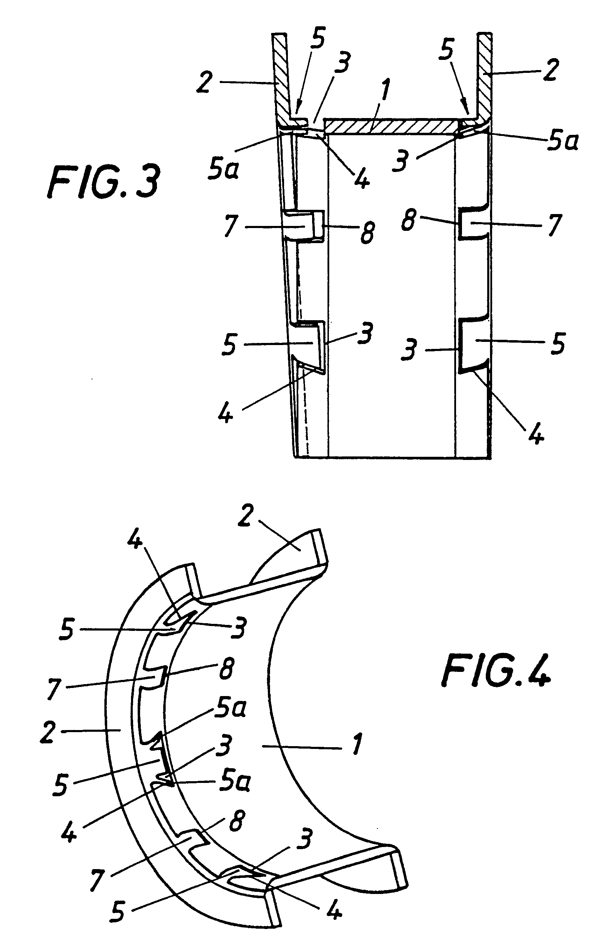

Zum Unterschied zu dem Ausführungsbeispiel nach den Fig. 1 und 2 weist die Lagerhalbschale 1 gemäß den Fig. 3 und 4 eine höhere Biegesteifigkeit auf, so daß das Einführen der Befestigungsansätze 5 nicht mehr über eine elastische Verformung der Lagerhalbschale 1 gewährleistet werden kann. Aus diesem Grunde ist der mittlere Befestigungsansatz 5 mit einer wenigstens angenähert rechtwinkeligen Grundform ausgebildet, wobei zwei Randstege 5a vorgesehen sind, die nach dem im wesentlichen axialen Einführen des mittleren Befestigungsansatzes 5 in die zugehörige Einsteckausnehmung 3 gemäß der Hinterschneidung 4 der Einsteckausnehmung 3 seitlich abgespreizt werden können, um eine der Form der Einsteckausnehmung 3 entsprechende schwalbenschwanzförmige Umrißform für diesen Befestigungsansatz zu erhalten, wie dies insbesondere aus der Fig. 4 ersichtlich ist.

Zur Befestigung des Anlaufbundes 2 an der Lagerhalbschale 1 ist es aufgrund dieser Ausbildung lediglich notwendig, den Anlaufbund 2 um einen die beiden axialen Ränder der Lagerhalbschale 1 im Breich der Stirnseite verbindenden Durchmesser gegen die Lagerhalbschale hin zu verschwenken, wie dies für den linken Anlaufbund 2 in Fig. 3 angedeutet ist. Aufgrund des gegebenen Spieles können bei einer solchen Schwenkbewegung die beiden randseitigen Befestigungsansätze 5 in die zugehörigen Einsteckausnehmungen 3 eingeführt werden, ohne die durch die Hinterschneidung 4 sichergestellte axiale Festlegung des Anlaufbundes zu gefährden, weil nach dem Abspreizen der Randstege 5a in der mittleren Einsteckausnehmung 3 ein Ausschwenken des Anlaufbundes 2 im Sinne eines Austrittes der randseitigen Befestigungsansätze 5 aus den Einsteckausnehmungen 3 nicht mehr möglich ist. Zur zusätzlichen Festlegung der Anlaufbunde 2 gegenüber der Lagerhalbschale 1 können zwischen den Befestigungsansätzen 5 Anschläge 7 an den Anlaufbunden 2 vorgesehen sein, die in entsprechende Ausnehmungen 8 in der Lagerhalbschale 1 eingreifen, um für eine ausreichende Kraftübertragung auch in Umfangsrichtung zu sorgen. Nach dem Abspreizen der Randstege 5a wird der Anlaufbund 2 gegenüber der Schale 1 in der in Fig. 4 dargestellten Weise gehalten, wie dies auch der Darstellung des rechten Anlaufbundes der Fig. 3 zu entnehmen ist.

Da die Befestigungsansätze 5 sich hinsichtlich der Lagerhalbschale 1 in axialer Richtung erstrecken und nicht wie herkömmlich in der Flanschebene selbst verlaufen, wird unabhängig von den jeweiligen Wandstärken eine sichere Verbindung zwischen der Lagerhalbschale 1 und den Anlaufbunden 2 erreicht, und zwar mit der Möglichkeit, einen an sich beliebigen Übergangsradius zwischen der Lagerhalbschale 1 und den Anlaufbunden 2 zu wählen.

## Ansprüche

1. Gleitlagerhälfte, bestehend aus einer Lagerhalbschale (1) und wenigstens einem Anlaufbund (2), der als gesonderter Endflansch ausgebildet und mit gegen die Lagerhalbschale (1) vorragenden Befestigungsansätzen (5) versehen ist, die in stirnseitig offene, wenigstens eine Hinterschneidung (4) aufweisende Einsteckausnehmungen (3) der Lagerhalbschale (1) eingreifen, dadurch gekennzeichnet, daß die Hinterschneidungen (4) der Einsteckausnehmungen (3) in axialer Richtung wirksam sind und daß die Befestigungsansätze (5) axial vom Anlaufbund (2) abstehend ausgerichtet und gegengleich zu den Einsteckausnehmungen (3) ausgebildet sind.

2. Gleitlagerhälfte nach Anspruch 1, dadurch gekennzeichnet, daß die Einsteckausnehmungen (3) und die gegengleichen Befestigungsansätze (5) schwalbenschwanzförmig ausgebildet sind.

3. Gleitlagerhälfte nach Anspruch 1 oder 2, dadurch gekennzeichnet, daß die Befestigungsansätze (5) aus in axiale Richtung abgewinkelten Zungen (6) bestehen.

4. Gleitlagerhälfte nach einem der Ansprüche 1 bis 3, dadurch gekennzeichnet, daß zumindest einer der Befestigungsansätze (5) eine wenigstens angenähert rechtwinkelige Grundform mit entsprechend der Hinterschneidung (4) der zugehörigen Einsteckausnehmung (3) abspreizbaren Randstegen (5a) aufweist.

## Claims

1. A half of a plain bearing, the half comprisimg a bearing half-shell (1) and at least one stop collar (2) which is in the form of a separate end flange and has fixing projections (5) projecting towards the bearing half-shell (1) and engaging in catch recesses (3) in the half-shell (1), the recesses (3) being open on the end face and having at least one relieved part (4), characterised in that the relieved parts (4) of the recesses (3) are effective axially and the fixing projections (6) are aligned axially so as to project from the stop collar (2) and are of companion form to the catch recesses (3).

2. A half of a plain bearing according to claim 1, characterised in that the recesses (3) and the comparison fixing projections (5) are of dovetail form.

3. A half of a plain bearing according to claim 1 or 2, characterised in that the fixing projections (5) are in the form of tongues (6) bent in the axial direction.

4. A half of a plain bearing according to any of claims 1 to 3, characterised in that at least one of the fixing projections (5) has an at least substantially rectangular basic shape with edge webs (3a) spreadable in accordance with the relieved part (4) of the associated recess (3).

## Revendications

1. Demi-coussinet de palier lisse composé d'une demi-coquille de coussinet (1) et d'au moins une collerette de congé (2), laquelle est constituée par une bride terminale distincte et munie de pattes de fixation (5) qui font saillie vers la demi-coquille de coussinet (1) et s'engagent dans des évidements d'emboîtement (3) de la demi-coquille de coussinet (1) ouverts latéralement et présentant une contre-dépouille (4), catactérisé en ce que les contre-dépouilles (4) des évidements d'emboîtement (3) sont effectives dans la direction axiale et en ce que les pattes de fixation (5) sont orientées pour faire saillie axialement sur la collerette de congé (2) et sont d'une-conformation complémentaire de celle des évidements d'emboîtement (3).

2. Demi-coussinet de palier lisse selon la revendication 1, caracterisé en ce que les évidements d'emboîtement (3) et les pattes de fixation complémentaires (5) ont une configuration de queue d'aronde.

3. Demi-coussinet de palier lisse selon la revendication 1 ou 2, catactérisé en ce que les pattes de fixation (5) sont constituées par des languettes (6) rabattues dans la direction axiale.

4. Demi-coussinet de palier lisse selon une des revendications 1 à 3, caractérisé en ce qu'au moins une des pattes de fixation (5) présente une forme de base au moins à peu près rectangulaire, avec des doigts latéraux (5a) que l'on écarte en leur donnant une forme qui correspond à la contre-dépouille (4) de l'évidement d'emobîtement (3) correspondant.

*FIG.1*

*FIG.2*

FIG.3

FIG.4